# EUROPEAN PATENT SPECIFICATION

(11) **EP 1 597 566 B1**
(45) Date of publication and mention of the grant of the patent: **09.04.2008**
(21) Application number: 04713077.8
(22) Date of filing: 20.02.2004
(51) Int. Cl.: G01N 21/952, G01N 21/954

(54) **METHOD AND APPARATUS FOR SCANNING CORROSION AND SURFACE DEFECTS**
ABTASTUNGVERFAHREN UND -VORRICHTUNG ZUR ABTASTUNG VON KORROSION UND OBERFLÄCHENFEHLERN
PROCEDE ET DISPOSITIF POUR EXPLORER UNE ZONE CORRODEE ET DES DEFAUTS DE SURFACE

(30) Priority: 21.02.2003 EP 03447033; 05.03.2003 US 451654 P
(43) Date of publication of application: 23.11.2005
(73) Proprietor: De Meurechy, Guido D. K., B-2880 Bornem (BE)
(72) Inventor: De Meurechy, Guido D. K., B-2880 Bornem (BE)
(74) Representative: Brants, Johan P.E.
(86) International application number: PCT/EP2004/001713
(87) International publication number: WO 2004/074808

(56) References cited:
- EP-A- 0 358 994
- US-A- 5 362 962
- KANIA R ET AL: "Non-destructive techniques for measurement and assessment of corrosion damage on pipelines" PROCEEDINGS OF THE INTERNATIONAL PIPELINE CONFERENCE, XX, XX, vol. 1, 1998, pages 309-313, XP001156170 cited in the application
- GU B ET AL: "Approach to assessment of corrosion growth in pipelines" PROCEEDINGS OF IPC'02 4TH INTERNATIONAL PIPELINE CONFERENCE, vol. B, 2002, pages 1837-1847, XP009035817 Calgary, Alberta
- REICHERT C ET AL: "Laser-based external corrosion mapping of pipelines" PROCEEDINGS OF THE SPIE, SPIE, BELLINGHAM, VA, US, vol. 4189, 2001, pages 90-98, XP009021033 ISSN: 0277-786X
- "When it comes to metal loss inspection.. PII has the answer" PII PIPELINE SOLUTIONS, [Online] 2002, pages 1-6, XP002294899 Retrieved from the Internet: <URL:http://www.gepower.com/prod_serv/serv /pipeline/en/downloads/metal_loss.pdf> [retrieved on 2004-08-16]

## Description

### Field of the invention

The present invention relates to the field of inspection of materials for the presence of corrosion or surface defects, such as dents, third party damage, etc.... In particular, the present invention relates to a method and an apparatus for determining and analyzing corrosion in or on a pipeline. In addition; the invention also relates to a method and apparatus for determining the life span for secure use of a pipeline. In another aspect the invention relates to a prediction system for predicting the secure life span of a pipeline.

### Background of the invention

Corrosion on the external or internal surfaces of in-service pipes, tanks, or other industrial assets reduces the integrity of the material and potentially reduces the service life of the equipment. Defects may have various forms and may be initiated by one or more mechanisms potentially resulting in corrosion and/or cracking. These factors affect a wide range of materials and bridge many industries including: automobile, industrial, aerospace, pipeline, power generation, tanks, vessels, heat exchangers, gas and pressure bottles, legs from off shore platforms, chimney, distillation towers and marine.

Corrosion is the breakdown of the parent material due primarily to electrochemical methods where there is an exchange of electrons between two materials. Corrosion has the potential to reduce a product's design life by premature degradation. Different types of corrosion occur. Uniform or general corrosion proceeds at approximately the same rate over the whole surface being corroded. Pitting results in pits in the metal surface due to localized corrosion. Crevice corrosion occurs in or immediately around a break in the material. Intergranular corrosion results in corrosion at or near the grain boundaries of the metal. Erosion Corrosion involves conjoint erosion and corrosion that typically occurs in fast flowing liquids that have a high level of turbulence. Environment-induced cracking results from the joint action of mechanical stresses and corrosion.

The various corrosion types produce distinct corrosion patterns. However, whether the corrosion is a result of low level and pitting corrosion that effects large areas or it is a more aggressive galvanic or microbiologically influenced corrosion, the result is metal loss that could compromise the integrity of the pipe or other structures. The corrosion patterns produced include uniform defects, pitted surfaces, striations, and channel defects.

Corrosion in pipelines is a very expensive problem and one that must be addressed continually by the industry. Pipeline operators employ a variety of in-line inspections tools for determining the corrosion status of a pipeline. One such inspection tool consists of socalled "pigs" and "smart pigs" or scrapers. Pigs are cylinder shaped plugs of the same diameter as a particular pipeline, 'smart pigs', are inspection vehicles that can be moved in and through the pipeline and on which mechanical arrangements, such as sophisticated electronic sensors and data collection devices, are mounted. Most pipelines are equipped with launchers and receivers that allow remote "smart pigs" to be pumped through the pipelines to assess the pipe condition on a periodic basis. Also cable pigs exist, which can be positioned in a pipeline, move in one direction and be pulled out by the cable. In-line smart pigs can identify damage and corrosion as well as evaluate the overall pipeline condition.

However, although generally effective, methods using smart pigs for measuring pitting have several drawbacks. One of the disadvantages of the use of such smart pigs, is that the pigs have difficulties traversing around sharp corners, squeezing into different size openings or changing pipe size. Therefore, the measuring methods are performed primarily in a longitudinal direction along straight pipe sections, obviating desirable evaluation of elbows, bends and curved circumferential portions of pipe surfaces. In addition, existing corrosion measurement instruments have mechanical limitations which further restrict measurement of corrosion to small areas or points. As a result, known methods typically obtain data whose accuracy and resolution is low. Where pipe diameters prevent entry, access to internal surfaces is limited to surfaces near openings.

Kania and Carroll (1998, Int. Pipeline Conf. Vol 1, ASME p. 309-313) describe the use of three systems, a laser-based pipeline corrosion assessment system, a semi-automatic ultrasonic system and a magnetic flux leakage scanner, for external and internal corrosion measurement of exposed pipelines. Results generated with these systems are used in corrosion assessment procedures such as RSTRNG to evaluate the condition of the pipeline ant suggest the appropriate remedial action, if required. However, the described technique permits to detect and localize the corroded area but does not provide information on the remaining life span of the pipeline wherein safe use of the pipeline is to be considered.

In conclusion, known methods for corrosion measurement are not only mechanically limited, but are also expensive and time consuming because of the labor involved to perform the method, process data, and interpret the results. In addition, when corrosion is detected and localized in a pipeline, the currently available methods have the other main disadvantage of not being able to determine the remaining life span of the pipeline wherein safe use of the pipeline is still to be considered.

Accordingly, the need exists for providing a cost-effective corrosion and surface analysis apparatus analyzing outer and or inner surfaces and for providing a method, which enables rapid measurement and evaluation of corrosion in all types of pipe sections, and which overcomes the draw back of the currently known methods and apparatuses.

Therefore, it is an object of the present invention to provide an improved method and apparatus for measuring corrosion, in particular in a pipeline, tank, vessel, chimney, etc... In particular, it is an object of the present invention to provide a method and apparatus for determining the life span for secure use of a pipeline.

### Summary of invention

In gas and liquid transmission pipelines corrosion can cause dangerous and expensive damages and assessment of pipe condition on a periodic basis is required. Environmental protection and the safe operation of pipelines within it are two primary concerns facing the oil and gas industry today. Consequently, the effective sizing and measuring and archiving of corrosion defects and their propagation and distribution is a prime consideration for pipeline operating companies worldwide.

Currently known method for measuring corrosion in a pipeline enable to localize the corrosion sensitive areas in a pipeline. However, such methods do not enable to determine the remaining life span for secure use of the corroded pipeline. The present invention provides a solution to this problem by providing an improved method and apparatus for determining the life span for secure use of a pipeline. The present apparatus and method enable to better define, characterize and size metal loss.

The present invention relates to an improved method and apparatus for determining the life span for secure use of an object that may undergo corrosion. The invention will be described with reference to the determination of the life span for secure use of a pipeline, for instance a gas or a liquid transmission pipeline. However, the method and apparatus according to the invention can also be used for the determination of corrosion and surface defects such as dents, third party damages, etc... and for determination of the life span for secure use of other objects such as but not limited to highway bridges, railroads, motor vehicles, aircrafts, ships, reactors, cranes, tanks, vessels, chimney, vans, heat exchangers, distillation towers, gas and liquid pressure bottles, off shore platform legs, heat exchangers, etc...

In a first aspect, the present invention relates to a method for determining the life span for secure use of a pipeline according to Claim 1.

In a preferred embodiment, the present invention further relates to a method as indicated above, enabling to identify, scan and analyze the locus of the lowest metal loss areas on the defect. In another preferred embodiment, the present invention further relates to a method as indicated above, enabling to automatically generate a worst-case profile of the river bottom of the deepest points in a certain surface defect.

With 'life span for secure use' of an object as used herein is meant the remaining time period wherein the object can be used in a secure or safe way and wherein rupture or damage to the object due to corrosion should not be expected.

A "defined area on a pipeline" is meant to include an area outside and/or inside of the pipeline.

The term "surface condition data" as used herein is meant to include condition data of the outer surface of a pipeline and/or condition data of the inner surface of a pipeline.

The method according to the invention enables to provide readily usable output related to corrosion in the defined area of interest. The output may be used to identify pitting, in a particular area and depth of the pits, and to evaluate the amount of remaining material, i.e. the remaining wall thickness, and the strength of a corroded pipeline. Therefore, a corrosion scanning system is used which can be moved in all possible directions in a three-dimensional plane.

The invention thus comprises localizing and measuring corrosion on the surface of the defined area by moving the corrosion scanning system in three dimensions, thereby localizing a plurality of corrosion pits on the surface of the pipeline. The corrosion scanning system used in the method according to the invention is constructed in such a way as to allow it to be positioned in all possible directions in a three dimensional plane.

In a preferred embodiment, the invention relates to the method, as indicated above, wherein step c) and d) comprise moving the corrosion scanning system in three dimensions over the surface of the defined area, whereby each measurement by the corrosion scanning system provides (outer and/or inner) surface condition data in X, Y and Z-coordinates.

In an even more preferred embodiment step c) and d) of the method according to the invention comprise moving the corrosion scanning system in three dimensions over the surface of the defined area, whereby for each measurement by the corrosion scanning system the surface condition data in X, Y and Z-coordinates are variable.

As a result thereof, a pipeline can be scanned in all possible directions. Surface condition data can be obtained in three dimensions which provides for a more accurate and more correct evaluation of the surface condition data of corrosion pits in the pipeline can be obtained than is the case with currently known methods.

In addition, the present invention also provides for the possibility of localizing and characterizing areas on a pipeline that are susceptible to corrosion. Therefor, the method according to the invention localizes, extends and interprets adjacent corrosion pits as being corrosion-susceptible areas.

In a second aspect the invention relates to a corrosion scanning system according to Claim 6.

In a preferred embodiment, the corrosion scanning system may comprise additional measuring instruments such as but not limited to laser ultrasonic or backscattering probes.

The corrosion scanning system enables to determine the life span for secure use of a pipeline by determining the location and severity of corrosion on the pipeline and in addition by also determining the remaining wall thickness of the pipeline at the corroded area. Therefore, the corrosion scanning system is provided with a laser instrument and also an ultrasonic measuring instrument, which can also be mounted on a positioning arm and as a result thereof can be moved in three dimensions.

Since the laser instrument and the ultrasonic measuring instrument can be moved in all possible directions in a three dimensional plane, the instrument is able to very accurately determine surface conditions of corrosion pits, including the position and surface characteristics such as width, depth, structure, and form of the corrosion pits. In particular, each measurement by the corrosion scanning system provides surface condition data in X, Y and Z-coordinates. Furthermore, for each measurement by the corrosion scanning system the surface condition data in X, Y and Z-coordinates are variable. Advantageously, the possibility to obtain surface condition data in three, variable directions, enables to obtain more correct and accurate information on corrosion.

Suitable computer readable means of the corrosion scanning system enable to receive and process the surface condition data obtained by the laser instrument and the ultrasonic measuring instrument in order to calculate the remaining life span of the pipeline, wherein use of the pipeline is safe.

The terms "a first computer readable means" and "a second computer readable means" as used herein refer to either two different computers having one common processor, or to one computer having two different processors. In this later case, data obtained by using the laser instrument can be processed with one processor, while the other processor processes the data obtained by using the ultrasonic measuring instrument. The computers may also include portable computers, or field computers.

The present invention thus provides a method permitting to detect, localize and analyze corrosion in or on a pipeline and to calculate the remaining lifetime of the pipeline and the life span for secure use of the pipeline. The present method uses only data relating to pipeline thickness and surface corrosion to detect and localize corrosion and to calculate the remaining pipeline lifetime. In addition, measurement of the surface corrosion and thickness is performed by a single system.

Those skilled in the art will immediate recognize the many possibilities for the embodiments and end uses of the present invention from the detailed description and accompanying drawings provided below.

### Detailed description of the figures

Fig. 1 is a perspective view of an embodiment of a positioning arm of a corrosion scanning system according to the present invention.
Fig. 2 is a perspective view of an embodiment of a positioning arm provided with a laser scanner or white light scanner of a corrosion scanning system according to the present invention.
Fig. 3 is a perspective view of an embodiment of a positioning arm provided with a laser scanner of a corrosion scanning system according to the present invention which has been mounted on a movable carriage.
Fig. 4 is a perspective view of an embodiment of the positioning arm provided with a laser scanner of a corrosion scanning system according to the present invention, which is connected to a computer readable means.
Fig. 5 illustrates the use of a corrosion scanning system according to the present invention for scanning a pipeline.
Fig. 6 illustrates the use of a corrosion scanning system according to the present invention for scanning a pipeline on location. The pipeline to be scanned is at least partially dig out and the scanning system is fixed onto a pipeline.
Fig. 7 provides a flow chart of the best fit algorithmic method followed according to the present invention.

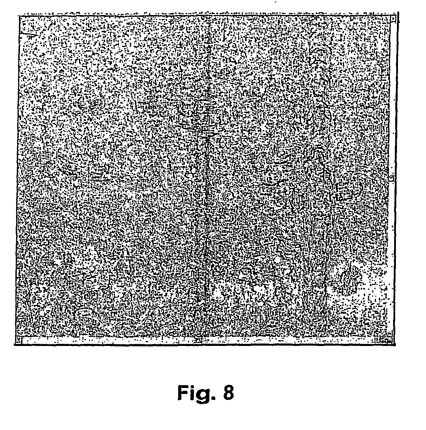

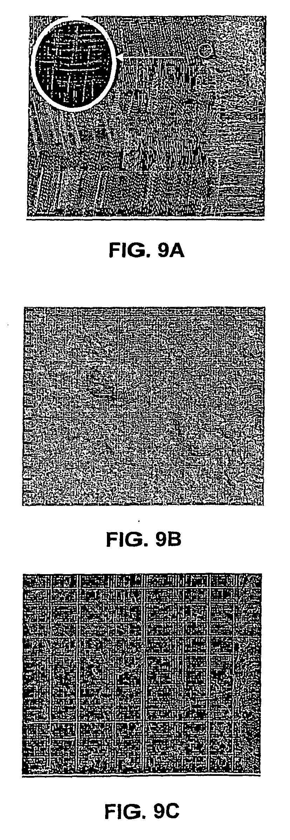

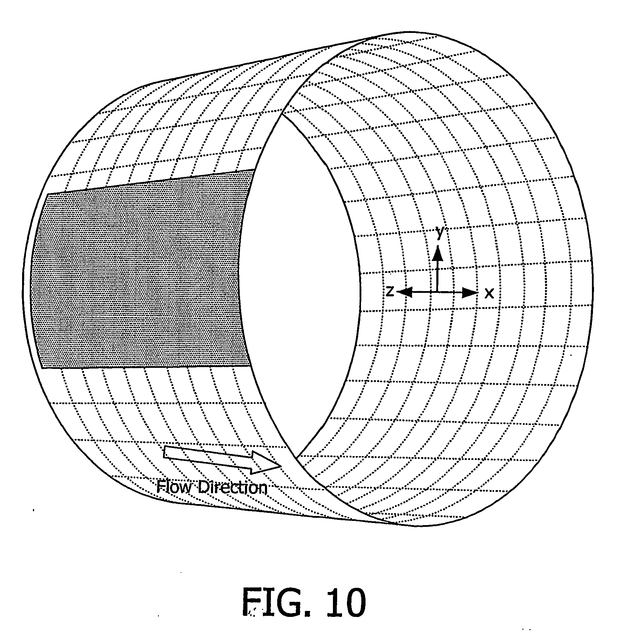

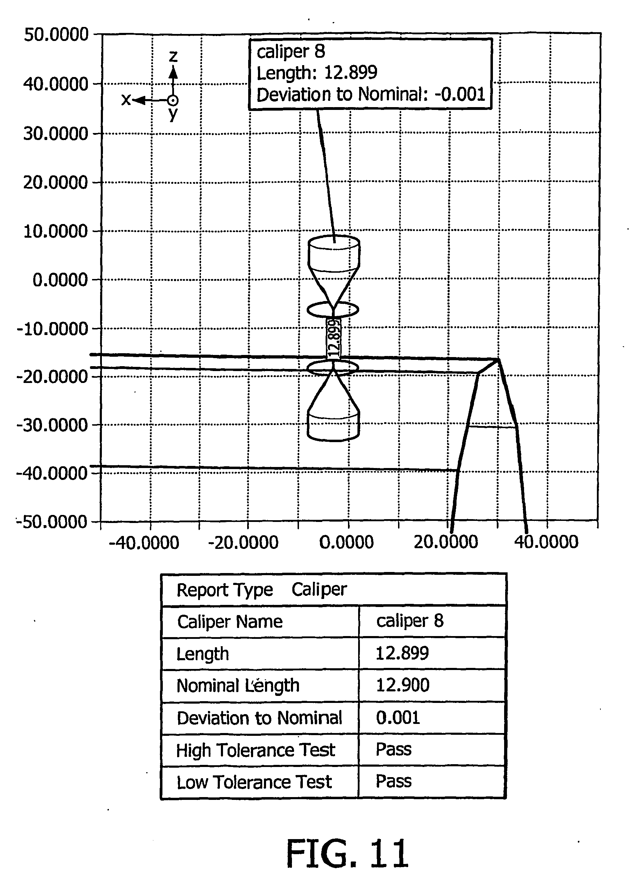

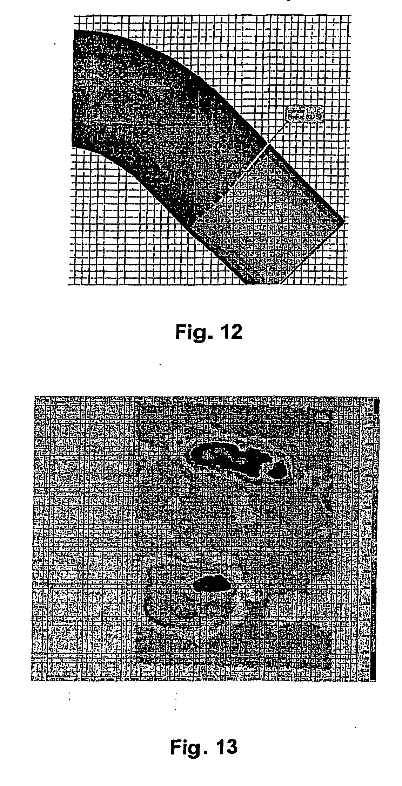

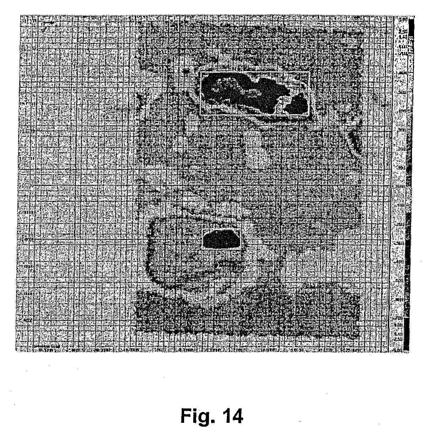

Fig. 8 to 14 illustrate several steps in the algorithmic best fit method applied on a pipeline. Fig. 8 provides a real time view of a scanned surface of a pipeline. Fig. 9 A-C represent an outcome of a conversion of a multiple 3D images into polygonal surfaces. Fig. 10 illustrates the alignment of a scan coordinate system to a world coordinate system. Fig. 11 illustrates the use of two callipers in the best fit algorithmic method. Fig. 12 illustrates a reference created from one best fit cylinder and a loft surface created with curves, created from cross-sections on scan data. Fig. 13 illustrates three corroded zones. The black curved lines are topologic lines representing a 10 % material loss line. The encapsulated zones represent corrosion. Fig. 14 represents two defect zones in a pipeline surface, indicated with white rectangular boxes.

### Detailed description of the invention

Corrosion is a naturally occurring phenomenon commonly defined as the deterioration of a substance, usually metal, or its properties because of a reaction with the environment. Corrosion can cause dangerous and expensive damages to objects such as highway bridges, gas and liquid transmission pipelines, railroads, motor vehicles, aircrafts, ships, cranes, petroleum refining, chemical, petrochemical and pharmaceutical production plants, nuclear power stations, etc... Corrosion can lead to structural failure, loss of life, loss of capital investment, and environmental damage and should therefore be detected, measured, mapped and evaluated.

A common misconception is that corrosion damage happens at the same rate and by the same corrosion mechanism all the time, which is in fact not the case. Corrosion takes place in episodes that are related to specific types of operational situation, e.g. caused by fluctuations in temperature or interaction between changed product chemistry and the pipe material. The severity, or potentially catastrophic nature, of the corrosion cannot be determined by rate only. For example, in a pressurized system, a lower rate of localized corrosion (e.g. pitting) may be of greater detriment to pipe integrity than a higher rate of general corrosion.

The present invention provides a corrosion scanning system and method, which enables rapid measurement and evaluation of corrosion on significant portions of straight as well as curved pipe sections, with related cost savings. Cost savings further result from improved accuracy, as decisions on removal or repair of pipe sections can be made with greater certainty, eliminating unnecessary repairs required when using conservative approaches necessary with less accurate techniques. Further, more reliable repairs can be made, which require lower factors of safety, providing further cost savings. The system and method also allow to differentiate, calculate and archive metal loss of a corrosion defect outside as well as inside a pipe.

### Method

In a first embodiment, the present invention provides a method for determining the life span for secure use of a pipeline, which may be applied on either flat, curved, or welded surfaces, such as pipe elbows, pipe circumferences, pipe welds, etc...

The method includes the initial steps of defining an area for surface corrosion analysis on the pipeline and providing a corrosion scanning system for scanning the defined inner and/or outer area on the pipeline. Subsequently, corrosion is localized and measured on the surface of the defined area by means of the corrosion scanning system. Hereby, a plurality of corrosion pits on said surface, are localized and measured. In a further step of the step of the method the remaining wall-thickness of the pipeline at the defined area is measured by means of the corrosion scanning system. In a final step, the surface condition data related to corrosion at the defined area obtained by means of the corrosion scanning system in the method is processed to determine the life span for secure use of the pipeline.

The method according to the invention enables to provide readily usable output related to corrosion in the defined area of interest. The output may be used to identify pitting, in particular area and depth of the pits, and to evaluate the amount of remaining material, i.e. the remaining wall thickness, and the strength of a corroded pipeline.

In traditional methods, corrosion scanning generally takes place at a fixed distance, i.e. constant Z coordinate, on the pipeline. As a consequence thereof, only variable surface conditions coordinates in two dimensions, i.e. variable X and Y coordinates are provided. In traditional methods, surface condition data in the Z coordinate are not measured.

Conversely, the method according to the invention performs corrosion scanning in three dimensions. This means that scanning does not take place in a fixed distance to the pipeline to be scanned. In the method according to the present invention a corrosion scanning system is applied which can be moved in all possible directions in a three-dimensional plane. As a consequence thereof, each measurement effectuated with the corrosion scanning system in the above provided method provides surface condition data in X, Y as well as Z coordinates. Furthermore, each measurement by the corrosion scanning system provides surface condition data in X, Y and Z-coordinates that are variable. Three-dimensional coordinates that are variable in accordance with the measurement conditions enable to provide more accurate, more complete and more effective data on corrosion, which is not obtainable when using traditional corrosion scanning systems.

In a particular embodiment, the present invention not only provides a method for identifying individual corrosion pits, but also provides a method for determining corrosion susceptible areas on a pipeline. Therefore, the corrosion scanning system used in the method according to the invention is constructed in such a way as to allow localization of individual corrosion pits. The localized neigh,boring corrosion pits are grouped and denoted as corrosion-susceptible areas.

Because the method of the present invention allows to localize and measure the surface of the defined area by means of the corrosion scanning system which is movable in X, Y and Z direction, the invention provides a method for corrosion analysis which can be performed on all sections of a pipeline, including straight as well as curved pipe areas and preferable welded areas, which in general are more sensitive to corrosion.

### Corrosion Scanning System

In another embodiment, the present invention relates to a corrosion scanning system for determining and characterizing corrosion on an area of the surface of an object defined for corrosion scanning analysis. The corrosion scanning system comprises the features specified in Claim 6.

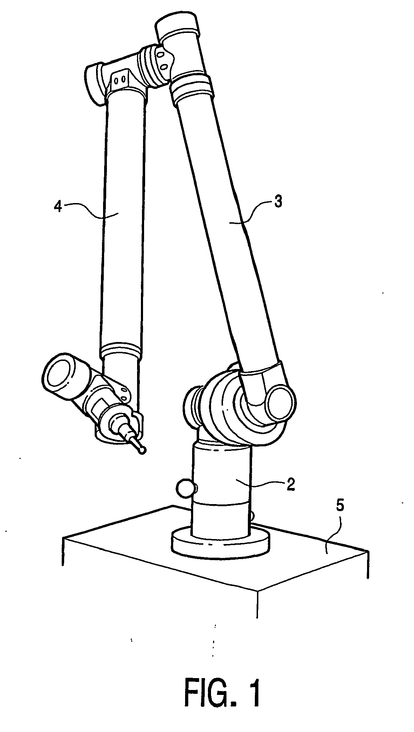

Referring to Fig. 1, an example of a positioning arm for the corrosion scanning system is shown. The positioning arm can be manually or automatically operated. The represented positioning arm 4-comprises a base member 2 suitable for positioning the arm 4-on a mounting element 5, a first leg 3 rotatably connected to the base member 2 and a second leg 4 rotatably connected to the first leg 4-and suitable for having at least one instrument rotatably and removably mounted thereon. Importantly, this arm 4-is capable of positioning and moving at least one instrument removably connectable thereto in three dimensions over the area defined for corrosion scanning analysis. The first 3 and second 4 leg of the positioning arm preferably made of metal, aluminium or a composite material such as Cevelar. In a preferred embodiment, the legs 3,4 of the positioning arm are made of a composite material. Such material has the advantage to be less susceptible to temperature fluctuations.

The number of legs of the positioning arm is not limited to the number represented on FIG. 1. The positioning arm, herein also referred to as 3D localizer, may have a single or multiple axes depending on the number of legs, e.g. from one limited or unlimited axis up to fourteen or more axes of freedom between the different legs. The arm can be placed on a trolley with magnetic wheels and be provided with encoders, which count and register the displacement and movements of the apparatus.

An ultrasonic measuring instrument and other probes is mounted on the same positioning arm. The instruments can be mounted on one of the legs of the positioning arm, and either on the second leg or the third, or fourth leg of the positioning arm.

In another preferred embodiment, the corrosion scanning system according to the invention further comprises a cooling system, connectable to a measuring instrument on said positioning arm and capable of controlling the temperature of said measuring instrument. Suitable cooling systems comprise but are not limited to closed loop cooling systems by cooling plates or to compressor cooling and/or temperature compensation for the positioning arm and/or the laser sensor or white light scanner, or to cooling by air flow in the sensor housing. Temperature compensation can be build in the measuring instruments and 3D localizer by means of a PT100, PT1000 or the like to compensate the measurements with the environmental temperature.

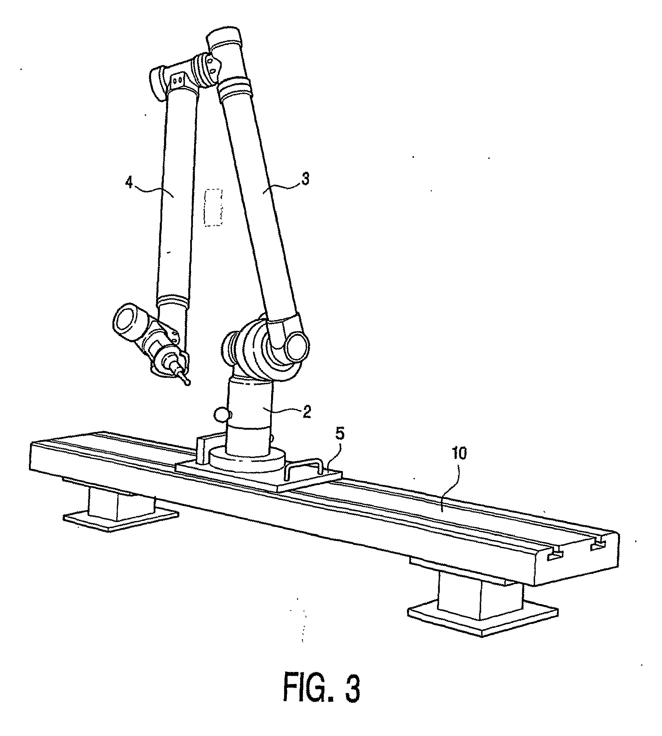

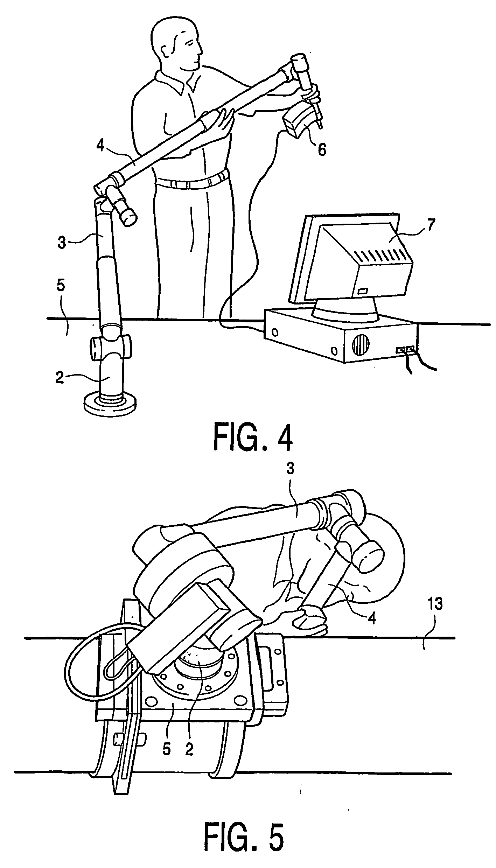

The positioning arm is highly accurate and portable, which can be easily set-up where needed regardless of the environment. In a preferred embodiment the positioning arm is provided with a base member 2 which is designed for portable or stationary use and which enables installation of the positioning arm on different types of mounting elements or mounting surfaces, including but not limited to a table top, a sliding rail, a tripod, a magnetic block, a cam-lock or the like. The positioning arm may thus also be mounted on the surface of the object to be scanned by means of a magnet. Such magnet can for instance be an electro-magnet, or a magnet with a cam-lock system. Preferably, the base member of the positioning arm is removably connected to the surface to be measured. For removably connecting the positioning arm, removable connecting means such as straps, magnetic means, such as fixed or activated magnets, clamps, brackets, studs, frames, vacuum gripping, cam-lock systems or the like, may be used as required by the application to secure the positioning arm relative to the surface. As well, the positioning arm may be provided on a movable or fixed carriage, which carries the positioning arm. Fig. 3 for example illustrates the installation of a positioning arm according to the present invention on a sliding rail 10. Such sliding rail may be applied on a transverse rail system, such that the positioning arm can be moved in axial and radial direction. Alternatively. Fig. 5 illustrates the installation of a positioning arm according to the present invention on a mounting surface 5, provided on a pipeline 13.

When the positioning arm is positioned on a trolley with magnetic wheels or other moving element, displacement of the arm is registered and this data may be added to the 3D surface condition data measured by the instruments provided on the positioning arm. Displacement of the arm can thus be easily and quickly recorded in the same world coordinate system as the registered surface condition data.

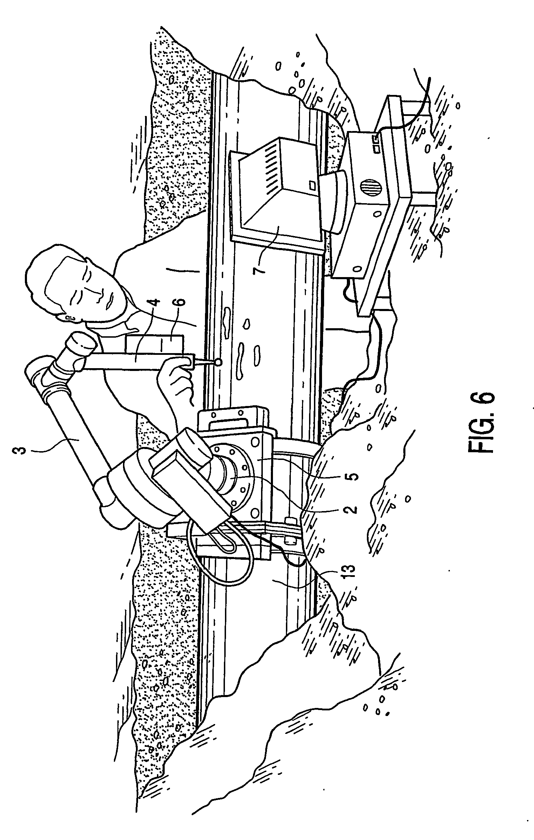

As indicated in Fig. 6, the system according to the invention is portable and readily usable in the field. As illustrated, a pipeline 13 is dig out and a corrosion scanning system is applied on the dig out pipeline 13. The scanning system is applied on the pipeline 13 by fixing the base member 2 of the positioning arm on a mounting surface 5. A user can now easily move the instrument 6 connected to the second leg 4 of the positioning arm over a surface of the buried pipe to investigate the corrosion status of that area. The positioning arm is connected to a computer readable means 7, such that the obtained data can be built in real time on the screen, making it possible to verify if the data is captured, and the object is completely scanned.

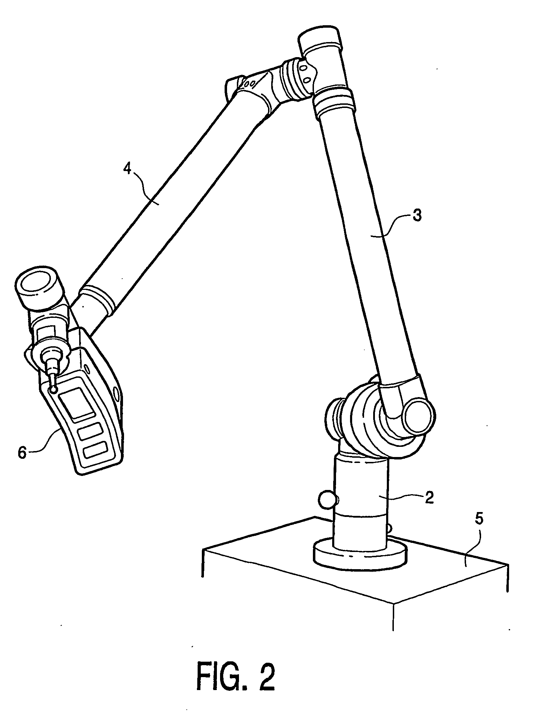

Fig. 2 represents an embodiment of the corrosion scanning system according to the invention, whereby a laser instrument 6 is connected to a positioning arm-4. The laser instrument is capable of emitting laser light to and for detecting reflected laser light from an area of a surface to evaluate the condition thereof. The laser instrument can be easily removed and reconnected to the second leg 4 of the positioning arm-4. In a preferred embodiment, the invention relates to a corrosion scanning system wherein the laser instrument 6 comprises a laser light source suitable for emitting laser light across an area of the surface of a material defined for corrosion scanning analysis, means for projecting laser light across the area of the surface, and a laser light detector suitable for detecting laser light reflected from the area of the surface of the material and generating surface condition data.

The laser instrument may comprise any type of laser instrument known in the art, including white light scanners such as moire. The laser instrument is suitable for surface digitalization. In the laser instrument, the laser source may be conventional, such as a laser diode or gas laser, for example a 5 mW helium-neon laser, or a Moire white light scanner. All known lasers, including those producing visible, infrared and ultraviolet light, may be used. The means for projecting the laser light establishes a field of view for the laser instrument and produces a narrow scan area on the surface. The means for projecting may comprise a means for scanning repeatedly a laser beam across the scan area. In that case, a beam constantly moves from one end of the scan area to the other to trace the scan area. Preferably the means for projecting includes means for spraying the laser beam in a constant pattern to constantly define the scan area, such as by diffraction or refraction of a laser beam by an element. Alternatively, the means for projecting is simply a means for defining a field of laser light projected from a source, such as a baffle shaped to define the radially projecting output from a laser diode and produce a field of view for the laser instrument. Laser light reflected from the surface to be measured is detected by the laser light detector. The laser light detector is preferably a charge-coupled device (CCD camera), which detects and records the pattern and intensity of laser light reflected from the scan area. Other suitable detectors, which accomplish the same result, are understood to be within the scope of this element of the invention. Such detectors may be, by way of non-limiting example, CCD arrays, photodiode arrays, TDI arrays, and photodetectors, such as Si, Ge, Pbs, and InGaAs photodetectors. As well, other suitable means for projecting which accomplish the same result are understood to be within the scope of this invention.

In another preferred embodiment of the present invention, the laser instrument 6 is capable of scanning approximately 20.000 or more measured points per second. Regardless of the method and means for projecting laser light, the number of scans per second may be varied by the user, and multiple scans of the same area may be taken. In a preferred embodiment of the present invention the laser instrument 6 is capable of scanning preferably 23.000 or more points per second. The light detectors, for instance charge coupled devices, are capable of sampling the reflected light along with its angular position every 400 microseconds or less to produce a measured point which is sent to the computer readable means. In another preferred embodiment, the corrosion scanning system according to the present invention enables to scan areas comprised between 500 and 1000 cm² per minute. In addition, in yet another embodiment the corrosion scanning system according to the present invention enables to provide high accuracy measurements, up to the µm-level and up to a density of 0.025 mm between each measured point.

The laser instrument is in operation connected to the second leg of the positioning arm. Since this positioning arm can be moved in all possible directions, accordingly, in operation, a laser beam can be projected across the surface of a material to define a scan area oriented in all possible directions, i.e. in X, Y as well as a Z direction. As a consequence thereof, each measurement with the laser instrument enables to obtain surface condition data in X, Y and Z-coordinates. Furthermore, for each measurement by the corrosion scanning system the surface condition data in X, Y and Z-coordinates are variable. As a result thereof, it becomes possible to very precisely evaluate a defined area, to reduce positioning errors, and to enhance precision, accuracy and speed, and surface conditions of corrosion pits, including the position and surface characteristics such as width, depth, structure, and form of the corrosion pits can be very accurately determined. and to the positioning arm for control thereof. The first computer readable means is suitable for receiving and processing the surface condition data obtainable by means of the laser instrument 4. In a preferred embodiment the corrosion scanning system further comprises first computer readable means 7, wherein the first computer readable means 7 is suitable for receiving and processing the surface condition data obtainable by the laser instrument 6 by using a best-fit algorithmic method, which is described in more detail below.

In a preferred embodiment, the positioning arm can move the laser instrument either stepwise between scans, or simultaneously during scans to measure the entire defined area of interest. In operation of the present invention the laser instrument produces surface condition data and the positioning arm produces related position data, both of which are received by the computer readable means.

Preferably, the production of surface condition and position data is automatic, and the computer readable means automatically processes those data to produce data related to corrosion on the area of the surface measured. The data related to corrosion of an area mainly relates to the identification and depth of the pits. In another embodiment, however, the present invention also provides for a corrosion scanning system that is capable of identifying the effective corrosion-susceptible area of a surface by grouping adjacent corrosion pits to a corrosion susceptible area. Programming for automatic operation of the laser instrument and positioning arm, as well as automatic signal processing, are within the capability of one skilled in the art. The data may be processed in real time, the data output device is also capable of readily providing data in usable form in the field, or is downloaded into memory for later processing.

In a preferred embodiment, different types of measuring instruments can be connected to the corrosion scanning system of the present invention. In traditional methods, when measuring corrosion defects by using different types of instruments, it is a problem to accurately match the defects measured with one instruments with the defects measured with another instrument. Odometer slippage, orientation differences, tool differences, accuracy and sensitivity, and changes in corrosion size and shape can make it difficult to match different measurements. The present corrosion scanning system resolves this problem by providing different measuring instruments on the same system. Corrosion is hereby measured at the same place, with the highest accuracy, by using different measuring instruments mounted on one and the same positioning arm. At the same place, i.e. at the same position for the X, Y and Z coordinates, different measurements are performed with different measuring instruments.

The invention further comprises an ultrasonic measuring instrument removably connected to the second leg of the positioning arm suitable for transmitting acoustic signals to and detecting reflected acoustic signals from an area of a surface to evaluate the condition thereof, and a second computer readable means connected to the ultrasonic measuring instrument and the positioning arm for control thereof, whereby the second computer readable means is suitable for receiving and processing the surface condition data obtainable by means of the ultrasonic measuring instrument. In a preferred embodiment, the laser instrument and the ultrasonic measuring instrument are both rotatably mounted on the second leg of the positioning arm.

The term "ultrasound" refers to sound energy with a frequency, or pitch, too high to be heard by the human ear. Ultrasonic mechanical vibrations occur at frequencies higher than the limit of human hearing, which is approximately 20 KHz. Most industrial ultrasonic testing is performed at frequencies between 500 KHz and 20 MHz, although frequencies down to 50 KHz and up to 200 MHz are used in some specialized situations. In general, using higher frequencies will create a clearer resolution of thin materials or small flaws, and lower frequencies offer better penetration for measurement of thick samples or materials that transmit sound waves inefficiently.

Ultrasonic sound waves are highly directional. Unlike audible sound, which radiates from its source in all directions, ultrasound can be generated as sharply focused beams that travel in predictable patterns through material. All sound waves reflect off boundaries between different materials. But at ultrasonic frequencies, the very short wavelengths permit reflection from very small targets, such as small flaws. For instance, an air boundary, like the far wall of a test piece or a crack within an otherwise solid object, will reflect nearly 100 percent of an ultrasonic sound beam that strikes it.

The ultrasonic measuring instrument is suitable for determining thickness of an object, e.g. wall thickness of the pipeline.

In a preferred embodiment, the invention relates to a corrosion scanning system wherein the ultrasonic measuring instrument comprises an ultrasonic transducer suitable for generating acoustic signals across an area of the surface of a material defined for corrosion scanning analysis, and suitable for detecting acoustic signals reflected from the area of the surface of the material and generating surface condition data. The ultrasonic transducer converts electrical energy into mechanical vibrations and vice versa and generates and receives high-frequency sound waves. As the physical structure of a material changes, so will the way sound waves that pass through it. Ultrasonic material analysis generally involves looking at parameters, such as sound speed, sound attenuation or scattering and frequency content of echoes. These parameters help to analyze or qualify material properties, including thickness of the material. Equipment for these operations can range from simple pulsers or receivers to complex analysis systems. The ultrasound detector detects and records the ultrasonic signals (sound waves) reflected from the outside and inside of the pipe wall. In particular, the detector determines the fluctuation in time difference between emission and receipt of an acoustic signal. Based thereon data on wall thickness can be calculated.

The ultrasonic measuring instrument is in operation connected to the second leg of the positioning arm. Since this arm can be moved in all possible directions, accordingly, in operation, acoustic signals can be projected across the surface of a material oriented in all possible directions.

In an example, a laser light probe and a ultrasonic probe may be provided on the same positioning arm of a system according to the present invention and register surface condition date in three dimensions. Since the distance between both probes on the arm is known, a specific software program transfers the 3D measurements from one probe into the same 3D measurements of the other probe. If depth measurements from both probes are rather equal, it can be determined that essentially external corrosion occurs. The equal depth measurements of both probes confirm the accuracy of the present system and could also be considered as a calibration possibility. The depth measurements performed by the laser light probe are determined by the best fit cylinder method which provides a real nominal diameter that is obtained by scanning the whole outside diameter of the pipe across the defect area. The external metal loss of the corrosion defect can be quantified in 3D. If the depth measurements of the ultrasonic probe do not correspond to those obtained with the laser light probe, it can be concluded that there is essentially metal loss inside the pipeline, which can be quantified by deducing total metal loss in mm³ obtained by the ultrasonic probe from the total metal loss in mm³ obtained by the laser light probe i.e. the total metal loss of the laser light probe under the best fit cylinder diameter across the defected area.

The corrosion scanning system wherein the ultrasonic measuring instrument is used according to the present invention enables to produce a record of measurements that can be used to determine the characteristics of the wall of a pipe, such as in a pipeline, the characteristics of the wall of a pipe being primarily the pipe wall thickness. In particular, in case of a corroded pipeline, it enables to measure the thickness of the remaining pipe wall. If no metal loss has occurred in the pipe wall due to corrosion or other mechanical damage, the instrumentation associated with the ultrasonics system will indicate normal wall thickness. However, if metal loss has occurred, the system will record information that indicates that the pipe wall is now thinner than that of the original, undamaged pipe. Traditionally, the ultrasonic process has been to simply measure the time the ultrasonic energy takes as it enters the pipe wall, reflects from the outer wall and returns to the transducer. For this measurement, the reference is the first reflection from the inside pipe wall (ID) surface. The next signal received from the transducer is ordinarily the reflection from the outside (OD) pipe wall. The time difference from the beginning of the ID signal to the start of the OD signal represents the time taken for the ultrasonic energy to traverse the pipe wall twice. This is commonly called two-way time and in pipeline inspection parlance it is often called "metal time" because it represents the time the ultrasonic energy takes to traverse the steel wall of the pipe. Using half the metal time (one-way time) the pipe wall thickness is readily computed because the velocity of sound in steel (approximately 5,793 m/sec.) is known. For example, US 5 362 962 A ultrasonic equipment is used to spot check pipe wall thickness after making erosion measurements with a laser instrument.

A second computer readable means is connected to the ultrasonic measuring instrument and to the positioning arm for control thereof. The second computer readable means is suitable for receiving and processing the surface condition data obtainable by means of the ultrasonic measuring instrument. In a preferred embodiment, said corrosion scanning system according to the present invention provides a second computer readable means which is different from the first computer readable means and whereby the first and the second computer readable means are capable of being interconnected. The first and the second computer readable means may be centralized in a portable unit, or portions of the computer readable means linked but separately located with and/or dedicated to the laser instrument or ultrasonic measuring instrument, positioning arm and/or other components. The computer readable means may, thus, for example be made of one or more microcomputer readables. Regardless of the configuration, at least some portion of the computer readable means is located apart from the laser instrument or ultrasonic measuring instrument and positioning arm and, preferably, cable (e.g. by means of fiber optic cables) connected to the positioning arm and/or laser instrument or ultrasonic measuring instrument, to control and receive data therefrom. Alternatively, the first computer readable means and the second computer readable means may be wirelessly interconnected with the laser instrument and the ultrasonic measuring instrument, respectively.

Data received by the first or the second computer readable means may be processed to provide graphical, visual or tabular information or output regarding the surface scanned, and may be further processed to determine the remaining wall thickness and the remaining strength of the scanned material, such as a pipe. Further processing may be incorporated to provide recommendations concerning repair of surfaces which have been scanned. A keyboard and a data output device, e.g. a printer, plotter, display, and the like, or combination thereof, is preferably provided to permit operator interface with the computer readable means. In another preferred embodiment, said data output device may also comprise electronic message mail via mobile phone or GPRS.

It will be understood that multiple laser instruments and ultrasonic measuring instruments are used simultaneously in accordance with the present invention, and are positioned on the same positioning arm to increase the speed and capacity with which a surface area of interest is evaluated.

It will also be further understood that additional measuring instruments, suitable for measuring the corrosion conditions of an object, in particular a pipeline, can be connected to the same positioning arm. Non-limiting examples of suitable additional measuring instruments include laser ultrasonic probes, UT laser probes, gamma-ray or beta-ray based backscattering probes; magnetic flux probes, wall thickness probes, etc... For instance, in another embodiment, wall thickness measuring instruments may be applied on the positioning arm. For instance, in another embodiment, also single spotlasers can be mounted on the positioning arm in combination with the other probes. For instance scattering measurement instruments, e.g. radiation probes such as gamma probes, may as well be used in accordance with the present invention. "Scattering" is defined as a wave propagating in a material medium, a phenomenon in which the direction, frequency or polarization of the wave is changed when the wave encounters discontinuities in the medium, or interacts with the material at the atomic or molecular level. "Radiation scattering" involves the diversion of radiation thermal, electromagnetic, or nuclear from its original path as a result of interaction or collisions with atoms, molecules, or larger particles in the atmosphere or other media between the source of radiation and a point some distance away. Measurement of scattering involves the measurement of the attenuation of an x-ray beam as it passes through an object and is recorded in the detector. Also, for instance, backscattering instrumentation with beta or gamma rays may be installed on the positioning arm. With the use of backscattering based probes it is possible to measure outer and inner surface defects without removing the insulation on the pipe, vessel, tank, chimney, distillation tower, etc... The backscattering instrumentation measures material density and is able to show differences in material. Using a gamma-ray or beta-ray based backscattering probe technology in the present apparatus, it is possible to measure multi-layer wall thickness and to measure the thickness of the insulation, the wall thickness and the interlayer insulation.

An important advantage of using different measuring instruments, all mounted on the same positioning arm, is that by using different measuring instruments different corrosion measurements and results are obtained, and that all results are obtained for the same position, i.e. for the same X, Y, Z coordinates, for all the used instruments. This allows obtaining optimal, complete and accurate information by different measurements of a particular inner and/or outer area of a scanned object.

Another advantage is that a small 3D localizer (positioning arm) for use on laboratory scale, e.g. for educational purposes or for research purposes, can be provided which can be mainly used for corrosion rate measuring and analyzes.

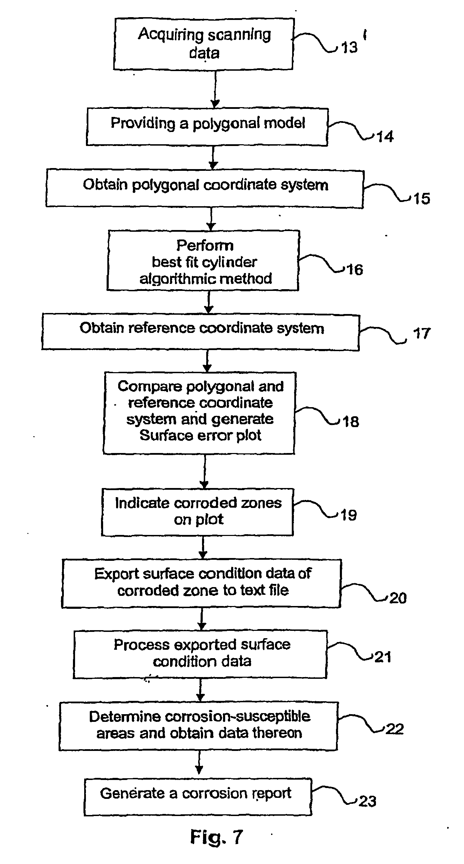

In another embodiment, the invention provides for a system and the appropriate software which enables following the corrosion surface in scan mode with a contact point probe on the positioning arm in combination with a other probe. In addition, this can also be done on a other device that is moving in three dimensions such as a measuring machine or X-Y-Z table. data obtained for instance by using a laser instrument on the scanning device. Fig. 7 provides a schematic overview of the steps, which are followed in this best-fit algorithmic method.

In a first step of this method comprises the acquisition in box 13' of the scanning data. Practically, a laser instrument, e.g. laser stripe sensor, is mounted on a positioning arm. The positioning arm can be manually or automatically operated. The laser stripe sensor projects a line on the object to be scanned. It measures the depth on the points of the stripe, while the positioning arm provides the global XYZ position coordinates. Laser stripe sensor and positioning arm are aligned on a cube with certified dimensions. The alignment results are stored in every scan file. The laser instrument is manually or automatically moved over the object to be scanned, capturing preferably up to 23.000 points a second. The obtained data is built in real time on the screen, making it possible to verify if the data is captured, and the object is completely scanned. Fig. 8 provides a real time view of a scanned surface of a pipeline.

According to the invention outer (exterior) surface data as well as inner (interior) surface data are acquired. Preferably, outer surface data are acquired as explained in the previous paragraph. For acquiring inner surface data, wall thickness measurements are made. Using the positioning arm in combination with a ultrasonic probe on top of the arm, thickness measurements are added to the exterior surface measurements.

Subsequently, the scanned data is merged in a fully automated process that converts multiple 3D images extracted from the scan-patches or unorganised point clouds into polygonal surfaces or a mesh. As indicated in Fig. 7, a polygonal model is obtained as indicated in box 14 and the scanned data is obtained in a polygonal coordinate system as indicated in box 15. The polygonal model consists in vertices (points) that are connected to neighbouring vertices with triangles. These transformations have following benefits. Each polygonal surface (triangle) has a normal, such that differences between inside and outside are viewable, and that clear shaded views as well can be made. Also, overlaps, are eliminated, and with an appropriated 3D Filter a smart reduction can be applied while preserving edges and details. Fig. 9 A-C represents the outcome of the conversion of multiple 3D images into polygonal surfaces. Fig. 9A shows a raw scan data (point cloud); Fig. 9B shows a shaded merged mesh, and Fig. 9C shows a point cloud (vertices) from multiple 3D images into polygonal surfaces. Fig. 9A shows a raw scan data (point cloud); Fig. 9B shows a shaded merged mesh, and Fig. 9C shows a point cloud (vertices) from merged mesh, 5-10 times reduced compared to the original point cloud.

In a preferred embodiment, after having merged exterior scan data, the accuracy of the scan system is checked. For that, a magnetic or non-magnetic, certified gauge block is placed, preferably at the 12 o'clock, or the 6 o'clock position of the pipe, with a build in spirit level. Preferably, this gauge block also has an arrow, which represents the flow direction. Pipeline thickness will be measured automatically with calipers. A "*caliper*" is an automated measurement device that measures the height of the gauge block steps. The calliper defines "the distance between the upper surface of the highest step and the upper surface of the lowest step" of the gauge block. Measured gauge block steps are compared with the certificated distance of the gauge block. The differences between measured and certified values preferably are well within the accuracy of the scan system.

In an example, two calipers are placed 'stepwise' on each other at the 12 o'clock position, as illustrated on fig. 11. The thickness from the upper caliper is automatically measured using the 'caliper method' and compared to the certificated thickness of the caliper. The difference between these values preferably falls within the accuracy of the scan system.

The coordinate system of the polygonal model is first provided in an arbitrary scan coordinate system depending on the position of the positioning arm. It is necessary for the future steps that the polygonal model is transferred to a reference coordinate system or world coordinate system. This is done by creating a best fit cylinder on the polygonal model. A 321 alignment is performed so that the axis from the best fit cylinder, i.e. the tubes axis, becomes the X axis, and that the physical flow direction and the X axis direction are the same. In a preferred embodiment, this direction is defined by the arrow of the gauge block, described above. The Z axis position and direction is set in the way that it points to the physical 12 o'clock position from the pipe/tube. Preferably, this direction is defined by the position of the gauge block. A reference coordinate system is obtained as indicated in box 17. Fig. 10 illustrates the alignment of a scan coordinate system to a world coordinate system.

The exterior surface of a physical pipe is never exactly cylindrical. Typical deformations are due to the presence of longitudinal and transversal welding seams, and the straightness and the ovality (unroundness) of the pipe itself. Depending on the straightness and the oval form of the pipe, the presence of welding seams, the dimensions of the corrosion and the corroded area, several reference types can be made. The references are a representation for the physical pipe in non-corroded state, except when using the best fit cylinder technique as explained below. The evaluation comparison between the merged scan data and the reference represents the local deformation, i.e. bend, material loss or wall thickness, etc...

References may be obtained according to different techniques.

In one embodiment, at least one best fit cylinder (more than 30 is for a bigger corrosion no exception) has to be created in order to acquire a good reference for the physical pipe, i.e. the pipe in non corroded state. Sometimes a good reference is impossible to create with only (multiple) best fit cylinders. In that case surfacing technique is required for creating the required reference, as explained above Fig. 12 illustrates a reference created from one best fit cylinder (lightgray zone), and a loft surface created with curves, created from cross-sections on scan data (darkgray zone). In an embodiment, best fit cylinders may be created in axial as well as in radial direction. For instance, for pipes having smaller diameters, where the pipe is corroded over its complete circumference, generally best fit cylinders are created in axial direction, or by means of surfacing techniques.

In another embodiment, a reference is created using a different technique. With non-standard pipes, bended pipes, prints, etc... A good reference with the best fit cylinder technique is hard or impossible to create. In these cases, it is possible to create a Nurbs surface, based on parametric cubic curves drawn onto the polygonal merged model in non-corroded areas.

In another embodiment, if the Interior surface data is dense enough, this dataset can be merged, giving a reliable polygonal dataset of the interior pipe surface. The comparison between inner (merged or not merged) and outer (merged or not merged) scan data represents the actual wall thickness.

In yet another embodiment, a floating best fit plane technique can be used. This technique of creating reference is particularly suitable for automatic reporting.

A comparison between the polygonal model and the (multiple) references (best fit cylinders or other types of references) as indicated in box 18 is performed and represents the depth of the corrosion. The comparison between references and the exterior (merged) scan data gives a surface error plot. This gives for each point the local material loss value, or actual wall thickness if reference is made from interior scan data. A surface error plot is automatically generated as shown in box 18 and gives a clear collared overview of depth and dimension of the corrosion. Zones with aberrations more than for instance 10 % of the wall thickness of the pipe or tube are considered as a corroded zone. The values for determining the corroded zones may vary and depend on norms introduced in the concerned industry. In a next step the corroded zones are indicated on the plot, as shown in box 19 and the surface condition data of each corroded zone is exported to a text file as indicated in box 20. These text files contain every vertex coordinate, i.e. X, Y and Z coordinate, as well as the deviation of these values compared to a reference value. Fig. 13 illustrates three corroded zone, wherein the black curved lines are topologic lines representing a 10 % material loss line and the encapsulated zones represent corrosion.

In a further step of this method, the surface condition data of each corroded zone are processed as shown in box 21 in order to determine the corrosion-susceptible areas and to obtain further data thereon as shown in box 22. Every point in the corroded zones, together with the vector of the error to the reference (best fit cylinders or other reference systems) is read in a customized program. The coordinates of the points are transformed in a way comparable with unrolling a cylinder surface. Depending on the used corrosion evaluation system, data such as the dimensions of the rectangular box defining the exterior defect outlines, the position and depth of the point with the maximum aberration, worst case X and Y profiles and 'river bed' are automatically calculated and extracted from all the defects. Some of the possible report elements include but are not limited to surface error plots; worst-case profiles and river beds. The present invention thus provides, in another preferred embodiment, a method for calculating the "worst-case profile" of the river bottom of the deepest points in a certain surface defect. Depending on the norms and standards used in the sector and/or the concerned industry one or more zones are considered as one corrosion-susceptible area. Fig. 14 represents two defect zones in a pipeline surface, indicated with white rectangular boxes, which were determined.

Finally, a corrosion report for the pipeline is made with elements acquired in the previous steps, as indicated in box 23. Corrosion reports may be provided manually or automatically. A special automatic corrosion analyzing and reporting software has been developed for standard pipes. In a preferred embodiment, the procedure includes the following steps:
- scanning the pipe, outside and/ inside
- evaluating scanning accuracy by performing calliper control,
- creating directly on the raw scan data a best fit cylinder in order to transform the data set, with the aide of a 3-2-1 alignment technique into the world coordinate system. The scan data is unfolded, i.e. unrolling the data with the aid of the Best fit cylinder created in previous step.
- merging the obtained dataset
- performing a "floating best fit plane" approach in order to create a reference made out of several Best fit planes. These local best fit planes on the unrolled data are comparable with the local best fit cylinders made with used in the manual reporting.
- automatically determining the corrosion zones and defects with the aid of the appropriate interaction rules, and
- specifying the elements to be reported in a customer specific template (e.g. the position and depth of the point with the maximum aberration, worst case X and Y profiles, ...). These elements are automatically generated, calculated, and exported in a pdf or html format. Or excel sheet of the XYZ coordinates of the deepest points in the defected surface with or without adding of the appropriate wall thickness on that location.

With regard to finite element analyses, strength or material stress analyses with standard FEM packages, which are will known in the art, can be done based on the obtained 3D scan data. The FEM software analyzes and calculates strength. With strength is meant the "maximum burst pressure allowed on the structure".

In another embodiment, a corrosion report can be made on-site. For that, in yet another embodiment, the method of processing obtained 3D data comprises performing a filtration directly within the recorded point cloud of 3D data and designing accurate best fit cylinders.

In another preferred embodiment, calibration and control of the accuracy of the laser probe or any other probe used in the present invention can be done as follows. On a plate e.g. a metal plate, an area of corrosion was milled on both sides of the metal piece, in order to mimic internal and external corrosion. Also, different materials were used as calibration piece, such as e.g. steel, having different ages, to perform a correct signal analysis for ultrasonic measuring probes and other probes and to correctly calibrate these probes. The corrosion plate is scanned with the laser or the other probes. In a preferred embodiment, the measuring values obtained with this calibration piece, which have an accuracy on the 1µM level, are introduced in the present 3D software program according to the invention and data obtained with the different probes is compared by means of this software. Depending on the results, the probes can be accurately calibrated. Such calibration protocol also enables to provide an indication of the accuracy of the data obtained when scanning a real corroded surface or to compensate the scan and or wall thickness data with the accurately measured data and offset the measurements with the certified calibration part measurements. According to the present invention, the simulated corroded part, calibration part is measured by a high accuracy measuring device according and certified by NIST, NAMAS, DKD, BKO, NKO, and other local and or international standards. The present apparatus is thus conform to these standards regarding accuracy and repeatability. Corrosion analysis can also be performed at different temperatures as the apparatus can be used in different climatic conditions. The apparatus is suitable for being used for instance in Alaska as well as in the dessert in the Middle East.

In another embodiment, the system and appropriate software according to the present invention enables to immediately compare the scanned data with data obtained with pigging-runs. In addition, the system and appropriate software according to the present invention also enables to compare the scanned data with X and Y or X-Y and Z data of each other measuring instrument. Thus the present invention enables to interface the obtained 3D data en reports with other software programs such as pipeline integrity software programs, pipeline management software programs and GIS programs. The present invention also provides the location and detailed view, directly in topography and GIS reports and data-sets.

In another preferred embodiment, the invention relates to a method wherein the location of the corrosion scanning apparatus is determined by GPS world coordinates. The data measured by the apparatus can also be correlated and joined with the GPS location of the positioning arm. The location of the positioning arm on the pipe can also be monitored by the GPS coordinates of this location.

### Industrial applicability

The apparatus and the method according to the invention can be used in various applications, wherein corrosion should be measured and characterized and/or wherein outer and/or inner surface defects should be measured and characterized. In particular, in another embodiment, the present invention relates to the use of the corrosion scanning and surface defects detecting system for determining and characterizing corrosion on an area of the inner and/or outer surface of an object defined for corrosion scanning analysis. In yet another preferred embodiment, the invention relates to the use of the corrosion scanning system and the method according to the present invention for determining the life span for secure use of an object. In particular, said object may be selected from the group comprising highway bridges, pipelines, railroads, motor vehicles, aircrafts, ships, cranes, reactors, tanks, vessels, chimney, heat exchangers, distillation towers, gas&liquid pressure bottles, off shore platform legs, vans, or the like. In a particularly preferred embodiment, said object comprises a gas or liquid transmission pipeline.

The present corrosion scanning apparatus provides many advantages compared to apparatuses and systems currently known in the art.

The invention provides a method as indicated above, enabling to identify, scan and analyze the locus of the lowest metal loss areas on the defect.

Measures to protect pipelines from corrosion are recommended in pipeline standards. They include e.g. application of protective external and/or internal coatings. The corrosion scanning apparatus according to the present invention enables to detect coating thickness and changes in time and evaluate these, compared with the metal loss propagation of the corrosion defects in time. The best fit cylinder method allows to define the pipe radius and pipe diameter before and after the impact of the corrosion defects.

In addition, dynamic stresses in a pipeline may cause growth of defects. The corrosion scanning apparatus according to the present invention enables to archive and measure in 3D coordinates inner as well as outer cracks and crack propagation in time.

Moreover, pipelines may undergo buckling. Frequently occurring buckling modes comprise a) local (pipe wall) buckling due to external pressure, axial compression, bending, and torsion, or combinations of these loads; b) propagation buckling due to external pressure, following the formation of local buckles or localized damage; and c) global buckling due to axial compression forces from high operating temperatures and pressures. The corrosion scanning apparatus according to the present invention enables measure in 3D coordinates the buckling length and axial deviations longitudinal and accurate measurement of the different diameters around the buckling area(s) to improve further assessment of repair facilities in function of different existing or new mathematical algorithms calculating rest span of life. The best fit cylinder technique allows to define the pipe radius or pipe diameter, before and after the buckling as well inside as outside the pipe and the axial deviations in degrees of these best fit cylinders. The present system can archive and measure in 3D coordinates the buckling areas and their propagation as a function of time resulting in improved assessment and interpretation of the impact of these propagations.

Another cause of damage to pipelines is the accidental damage from an outside force, e.g. someone digging into or striking the pipeline. The pipeline failure may occur months or even years later. It is of great importance to determinate the impact of these defects. The corrosion scanning apparatus according to the present invention enables to measure in 3D coordinates the depth, length and volume of the dents outside and inside with accurate measurement of the different radius around the denting area to improve further assessment of repair facilities in function of different existing or new mathematical algorithms calculating rest span of life. The best fit cylinder or floating best fit cylinder technique allows to define the radius before and after denting as well inside as outside the denting areas. The best fit cylinder algorithmic method additionally provides the out of roundness of the pipe diameter as well inside as outside. In case of dents with metal loss, the measurements of the metal loss will be sized in different ranges of metal loss depth and metal loss volumes in function of chosen depth ranges. Complete 1D,2D or 3D digital archiving can be done of the defects.

To determine the failure probability of a pipeline for it's full design life, all possible failure modes (i.e. loadings) must be identified and credible failures analyzed. Principal credible failures for pipelines on and offshore include external interference and corrosion (external and/or internal). For some pipelines failure modes may include fatigue e.g. of seam weld defects due to large cyclic pressure variations; flexural instability, i.e. buckling due to thermal stresses or seabed movement, or girth weld defects, e.g. due to pressure, external loading or fatigue due to cyclic pressures. Probabilistic analysis of these failure modes, i.e. application of the whole life limit design is generally constrained by the paucity of appropriate data, e.g. defect distributions, corrosion rates etc forcing conservative assumptions and consequently conservative failure rates. In particular, defect distributions are necessary for the calculation of failure probabilities. However most currently known systems do not maintain records of pipeline defects, and those databases make only record failures i.e. incidents resulting in loss of product, available. This hampers any probabilistic approach (limit state design or risk analysis), since failure probability is influenced by the total defect population. Conversely, the corrosion scanning system provides for recording the corrosion scanning data and to create a database containing such data. Advantageously, such data and database can be used for preparing a prediction diagram for determining the life span for secure use of a pipeline.

The 3D outside and inside measurements accuracy of the corrosion scanning apparatus according to the present invention can be of the greatest help to define better prediction results for determining the life span for secure use of a pipeline. A shortage of measurement accuracy of the corrosion defects and their propagation can result in overestimating the future severity of a large number of defects or underestimating the severity of a smaller number of defects. In the first case, the overestimation is conservative but it can be so overly conservative that resources are wasted in doing unnecessary repairs. In the second case, the underestimation of severity can cause the operator to have a false sense of security, potentially leading to pipeline failure.

The present corrosion scanning system provides a very high accuracy in 3D corrosion measurements outside and/or inside a pipeline, with the appropriated software to handle all possible methodologies and mathematical approaches for whole life limit state design and rest span of life calculations with an accurate 3D digital archiving which provides new possibilities for effective measurement of corrosion distribution and propagation simply by slicing the new scanning data over the historical scanning and to filtrate by appropriate software the defect changes and propagations.

It will be understood that the data and database can also be used for preparing a prediction diagram for determining the life span for secure use of multiple other object, included but not limited to highway bridges, pipelines, railroads, motor vehicles, aircrafts, ships, cranes, reactors, tanks, vessels, chimney, heat exchangers, distillation towers, gas and liquid pressure bottles, off shore platform legs, vans or the like.

Another application of the present corrosion scanning system comprises its use in replicas. Nowadays, a lot of corrosion defects are still archived through rubber replicas or other materials. The present corrosion scanning system can measure and archive these replicas in three dimensions.

The present corrosion scanning system can also be used for reproducing the obtained surface condition data (in 3D) of the defect(s) or the corrosion on another pipeline part or other part. With the 3D data of the present apparatus and appropriate software the possibility exist to copy the corrosion or the defect and their particular metal loss on a other pipeline part or other part to simulate this on a other part for testing. This can be done with a milling, electro-erosion machine, sparkle machines, benting machines or the like. Different tests like burst tests enable to compare these tests, like rest burst pressure or stress analyzing tests afterwards with the expected or calculated results/figures. The present corrosion scanning system thus enables to compare the calculated or expected tests with the effective tests such as burst pressure test on for example pipes, turbine parts, tanks, "pump" housings or constructions.

The present corrosion scanning system may also be used as educational example or for research whereby proposals regarding the shape and sizing of the surface defect are made in a replica form. The present corrosion scanning system can be made in all sort of materials including but not limited to steel, cast iron steel, stainless steel, plastics, wood, etc....

In yet another preferred embodiment, the present corrosion scanning system and the appropriate software can also be used for scanning cracks and to perform stress analysis.

In another embodiment, the present scanning system also provides for multi-layer thickness scanning in three dimensions. Preferably for this purposes probes such as an ultrasonic, laser ultrasonic, or backscattering measuring instruments can be used that are able to measure up to 25 or more layers in one run.

The present method and apparatus can also be applied in the pipe line construction business. Providing a best mounting order of the pipes is a good tool in this industry, to facilitate assembling. Based on pipe end scan data a minimum best fit cylinder can be automatically created. This is a mathematical cylinder (radius = constant) with the biggest inscribing radius possible (every point is outside the fitted cylinder or every point has a positive error compared to the fitted cylinder). The comparison between the fitted primitive and the scan data gives a comparison table and a surface error plot. Based on the comparison table a procedure can be made in order to determine a list with an order of pipes suggesting a possible 'best fit' solution. Three parameters are considered: a) the radius of the best fit minimum cylinder, b) the mean deviation to the cylinder and c) the standard deviation to the cylinder (StdDev). The result of this procedure is a list giving a best mounting order: e.g. Tube 1 side 2, Tube x1 side y1, Tube x2 side y2, Tube x3 side y3...

## Claims

1. A corrosion scanning system for determining and characterizing corrosion on an area of the surface of an object defined for corrosion scanning analysis comprising
- a laser instrument (6) suitable for emitting laser light to and detecting reflected laser light from an area of a surface to evaluate the condition thereof,
- a first computer readable means (7) connected to the laser instrument (6) for control thereof, whereby the first computer readable means (7) is suitable for receiving and processing the surface condition data obtainable by means of the laser instrument (6),
- an ultrasonic measuring instrument suitable for transmitting acoustic signals to and for detecting reflected acoustic signals from an area of a surface to evaluate the condition thereof, and
- a second computer readable means connected to the ultrasonic measuring instrument whereby the second computer readable means is suitable for receiving and processing the surface condition data obtainable by means of the ultrasonic measuring instrument,
a positioning arm capable of positioning and moving at least one instrument removably connectable thereto in three dimensions; and
whereby said at least one instrument is said laser instrument and said laser instrument is removably mounted to the positioning arm
**characterized in that** said ultrasonic measuring instrument is also said at least one instrument and is also removably mounted to the positioning arm, and said first and said second computer readable means are connected to the positioning arm.

2. A corrosion scanning system according to claim 1, wherein said positioning arm, capable of positioning and moving at least one instrument removably connectable thereto in three dimensions over the area defined for corrosion scanning analysis, comprises a base member (2) suitable for positioning the arm on a mounting element (5), a first leg (3) rotatably connected to the base member (2), a second leg (4) rotatably connected to the first leg (3) and suitable for having at least one instrument rotatably and removably mounted thereon.

3. A corrosion scanning system according to claim 1 or 2, wherein said base member (2) of said positioning arm is positioned on a mounting element (5) such as a table top, a sliding rail (10), a tripod, a magnetic block, a cam-lock or the like.

4. A corrosion scanning system according to claim 1, 2 or 3, wherein the first computer readable (7) means is suitable for receiving and processing the surface condition data obtainable by the laser instrument (6) by using a best-fit algorithmic method.

5. A corrosion scanning system according to claim any of claims 1 to 4, wherein the first computer readable (7) means is further suitable for receiving and processing the surface condition data obtainable by the laser instrument (6) by using a floating best fit plane algorithmic method.

6. A corrosion scanning system according to any of claims 1 to 5 wherein the laser instrument (6) comprises a laser light source suitable for emitting laser light across an area of the surface of a material defined for corrosion scanning analysis, means for projecting laser light across the area of the surface, and a laser light detector suitable for detecting laser light reflected from the area of the surface of the material and generating surface condition data.

7. A corrosion scanning system according to any of claims 1 to 6, whereby the laser instrument and the ultrasonic measuring instrument are both rotatably mounted on the second leg of the positioning arm.

8. A corrosion scanning system according to any of claims 1 to 7, wherein the second computer readable means is different from the first computer readable means and whereby the first (7) and the second computer readable means are capable of being interconnected and wherein the first computer readable means (7) and the second computer readable means either comprise two different computers having one common processor, or to one computer having two different processors.

9. A corrosion scanning system according to any of claims 1 to 8, wherein the first computer readable means and second computer readable means comprise a data output device selected from the group comprising an electronic display, a printer, a plotter, or a combination thereof.

10. A corrosion scanning system according to any of claims 1 to 9, wherein said system further comprises additional measuring instruments, removably connected to the second leg (4) of the positioning arm.

11. A corrosion scanning system according to any of claims 1 to 10, further comprising a cooling system, connectable to a measuring instrument on said positioning arm and capable of controlling the temperature of said measuring instrument.

12. Method for using the corrosion scanning system of claim 1 to determine the life span for secure use of a pipeline (13) comprising the steps of:
a) defining an area for surface corrosion analysis on the pipeline (13),
b) providing a corrosion scanning system for scanning the defined area on the pipeline (13),
c) localizing and measuring corrosion on the surface of the defined area by means of the corrosion scanning system, for localizing and measuring a plurality of corrosion pits on said surface,
d) determining the wall-thickness of the pipeline at the defined area by means of the corrosion scanning system,
**characterized in that** the method further comprises the step of determining the life span for secure use of the pipeline by processing the surface condition data related to corrosion at the defined area obtained in steps c) and d)

13. A method according to claim 12, wherein step c) and d) comprise moving the corrosion scanning system in three dimensions over the surface of the defined area, whereby each measurement by the corrosion scanning system provides surface condition data in X, Y and Z-coordinates.

14. A method according to claim 12 or 13, wherein step c) and d) comprise moving the corrosion scanning system in three dimensions over the surface of the defined area, whereby for each measurement by the corrosion scanning system the surface condition data in X, Y and Z-coordinates are variable.

15. A method according to any of claims 12 to 14, wherein adjacent corrosion pits are localized and extended to and interpreted as being corrosion-susceptible areas.

16. A method according to any of claims 12 to 15, wherein the defined area for surface corrosion analysis on the pipeline (13) comprises straight as well as curved pipe areas and is preferable a welded area.

## Patentansprüche

1. Korrosionsabtastsystem zum Bestimmen und Kennzeichnen von Korrosion auf einem Bereich der Oberfläche eines Gegenstands, der für die Analyse der Korrosionsabtastung festgelegt ist, umfassend:
- ein Laserinstrument (6), das geeignet ist, Laserlicht zu einem Bereich einer Oberfläche auszusenden und davon reflektiertes Laserlicht zu erfassen, um dessen Zustand zu bewerten,
- ein erstes maschinenlesbares Mittel (7), das mit dem Laserinstrument (6) zu dessen Kontrolle verbunden ist, wodurch das erste maschinenlesbare Mittel (7) geeignet ist, Daten über den Oberflächenzustand, die mit Hilfe des Laserinstruments (6) zu erhalten sind, zu empfangen und zu verarbeiten,
- ein Ultraschallmessgerät, das geeignet ist, akustische Signale zu einem Bereich einer Oberfläche zu übertragen und davon reflektierte akustische Signale zu erfassen, um dessen Zustand zu bewerten, und
- ein zweites maschinenlesbares Mittel, das mit dem Ultraschallmessgerät verbunden ist, wodurch das zweite maschinenlesbare Mittel geeignet ist, Daten über den Oberflächenzustand, die mit Hilfe des Ultraschallmessgeräts zu erhalten sind, zu empfangen und zu verarbeiten,
- einen Stellarm, der in der Lage ist, mindestens ein Gerät, das abnehmbar damit verbunden werden kann, in drei Dimensionen anzuordnen und zu bewegen; und wodurch das mindestens eine Gerät ein Laserinstrument ist und das Laserinstrument abnehmbar an dem Stellarm befestigt ist
**dadurch gekennzeichnet, dass** das Ultraschallmessgerät ebenfalls mindestens ein Instrument ist und ebenfalls abnehmbar an dem Stellarm befestigt ist, und das erste und das zweite maschinenlesbare Mittel mit dem Stellarm verbunden sind.

2. Korrosionsabtastsystem nach Anspruch 1, wobei der Stellarm, der in der Lage ist, mindestens ein Gerät, das damit abnehmbar verbunden werden kann, in drei Dimensionen über den Bereich, der für die Analyse der Korrosionsabtastung festgelegt ist, anzuordnen und zu bewegen, ein Basiselement (2) umfasst, das geeignet ist, den Arm auf einem Befestigungselement (5) anzuordnen, einen ersten Fuß (3), der drehbar mit dem Basiselement (2) verbunden ist, einen zweiten Fuß (4), der drehbar mit dem ersten Fuß (3) verbunden ist und geeignet ist, mindestens ein Gerät aufzuweisen, das drehbar und abnehmbar darauf angebracht ist.

3. Korrosionsabtastsystem nach Anspruch 1 oder 2, wobei das Basiselement (2) des Stellarms auf einem Befestigungselement (5), wie zum Beispiel einer Tischplatte, einer Gleitschiene (10), einem Stativ, einem Magnetblock, einem Haltenocken, oder ähnlichem angeordnet ist.

4. Korrosionsabtastsystem nach Anspruch 1, 2 oder 3, wobei das erste maschinenlesbare Mittel (7) geeignet ist, die Daten über den Oberflächenzustand, die von dem Laserinstrument (6) zu erhalten sind, zu empfangen und unter Verwendung einer Best-Fit-Algorithmusmethode zu verarbeiten.

5. Korrosionsabtastsystem nach einem der Ansprüche 1 bis 4, wobei das erste maschinenlesbare Mittel (7) ferner geeignet ist, die Daten über den Oberflächenzustand, die von dem Laserinstrument (6) zu erhalten sind, zu empfangen und unter Verwendung einer gleitenden Best-Fit-Flächenalgorithmusmethode zu verarbeiten.

6. Korrosionsabtastsystem nach einem der Ansprüche 1 bis 5, wobei das Laserinstrument (6) eine Laserlichtquelle umfasst, die geeignet ist, Laserlicht über einen Bereich der Oberfläche eines Materials, das für die Analyse der Korrosionsabtastung festgelegt ist, auszusenden, Mittel zum Projizieren von Laserlicht über den Bereich der Oberfläche, und einen Laserlichtdetektor, der geeignet ist, Laserlicht zu erfassen, das von dem Bereich der Oberfläche des Materials reflektiert wird und Daten über den Oberflächenzustand zu erzeugen.

7. Korrosionsabtastsystem nach einem der Ansprüche 1 bis 6, wobei das Laserinstrument und das Ultraschallmessgerät beide drehbar auf dem zweiten Fuß des Stellarms befestigt sind.

8. Korrosionsabtastsystem nach einem der Ansprüche 1 bis 7, wobei das zweite maschinenlesbare Mittel sich von dem ersten maschinenlesbaren Mittel unterscheidet und wobei das erste (7) und das zweite maschinenlesbare Mittel in der Lage sind, miteinander verbunden zu werden, und wobei das erste maschinenlesbare Mittel (7) und das zweite maschinenlesbare Mittel entweder zwei verschiedene Rechner umfassen, die einen gemeinsamen Prozessor aufweisen, oder einen Rechner, der zwei verschiedene Prozessoren aufweist.

9. Korrosionsabtastsystem nach einem der Ansprüche 1 bis 8, wobei das erste maschinenlesbare Mittel eine Datenausgabevorrichtung umfasst, die aus der Gruppe ausgewählt wurde, die eine elektronische Anzeige, einen Drucker, einen Plotter oder eine Kombination davon umfasst.

10. Korrosionsabtastsystem nach einem der Ansprüche 1 bis 9, wobei das System ferner zusätzliche Messgeräte umfasst, die abnehmbar mit dem zweiten Fuß (4) des Stellarms verbunden sind.

11. Korrosionsabtastsystem nach einem der Ansprüche 1 bis 10, ferner umfassend ein Kühlsystem, das mit einem Messgerät auf dem Stellarm verbunden werden kann und das in der Lage ist, die Temperatur des Messgeräts zu kontrollieren.

12. Verfahren zur Verwendung des Korrosionsabtastsystems aus Anspruch 1, um die Lebensdauer für die sichere Verwendung einer Rohrleitung (13) festzulegen, folgende Schritte umfassend:
a) Festlegen eines Bereichs für die Analyse der Oberflächenkorrosion an einer Rohrleitung (13),
b) Bereitstellen eines Korrosionsabtastsystems zum Abtasten des festgelegten Bereichs an der Rohrleitung (13),
(c) Orten und Messen der Korrosion auf der Oberfläche des festgelegten Bereichs mit Hilfe des Korrosionsabtastsystems, zum Orten und Messen mehrerer Rostnarben auf der Oberfläche,
(d) Bestimmen der Wandstärke der Rohrleitung in dem festgelegten Bereich mit Hilfe des Korrosionsabtastsystems,
**dadurch gekennzeichnet, dass** das Verfahren ferner den Schritt des Bestimmens der Lebensdauer zur sicheren Verwendung der Rohrleitung durch Verarbeiten der Daten über den Oberflächenzustand in Bezug auf die Korrosion in dem festgelegten Bereich, die in Schritt c) und d) erhalten wurden, umfasst

13. Verfahren nach Anspruch 12, wobei Schritt c) und d) das Bewegen des Korrosionsabtastsystems in drei Dimensionen über die Oberfläche des festgelegten Bereichs umfasst, wobei jede Messung durch das Korrosionsabtastsystem Daten über den Oberflächenzustand in X-, Y- und Z-Koordinaten liefert.

14. Verfahren nach Anspruch 12 oder 13, wobei Schritt c) und d) das Bewegen des Korrosionsabtastsystems in drei Dimensionen über die Oberfläche des festgelegten Bereichs umfasst, wobei für jede Messung durch das Korrosionsabtastsystem die Daten über den Oberflächenzustand in X-, Y- und Z-Koordinaten variabel sind.

15. Verfahren nach einem der Ansprüche 12 bis 14, wobei benachbarte Rostnarben geortet werden und vergrößert werden und als korrosionsgefährdete Bereiche ausgelegt werden.

16. Verfahren nach einem der Ansprüche 12 bis 15, wobei der festgelegte Bereich für die Analyse der Oberflächenkorrosion an der Rohrleitung (13) gerade sowie gekrümmte Rohrbereiche umfasst und vorzugsweise ein geschweißter Bereich ist.

## Revendications

1. Système de balayage de corrosion pour déterminer et caractériser la corrosion sur une zone de la surface d'un objet définie pour une analyse de balayage de corrosion comprenant :
- un instrument laser (6) adapté pour émettre une lumière laser à destination et détecter une lumière laser réfléchie en provenance d'une zone d'une surface pour évaluer l'état de celle-ci,
- un premier moyen lisible par ordinateur (7) connecté à l'instrument laser (6) pour le contrôler, moyennant quoi le premier moyen lisible par ordinateur (7) est adapté pour recevoir et traiter les données d'état de surface pouvant être obtenues au moyen de l'instrument laser (6),
- un instrument de mesure ultrasonique adapté pour transmettre des signaux acoustiques à destination et pour détecter des signaux acoustiques réfléchis d'une zone d'une surface pour évaluer l'état de celle-ci, et
- un second moyen lisible par ordinateur connecté à l'instrument de mesure ultrasonique, moyennant quoi le second moyen lisible par ordinateur est adapté pour recevoir et traiter les données d'état de surface pouvant être obtenues au moyen de l'instrument de mesure ultrasonique,
- un bras de positionnement capable de positionner et de déplacer au moins un instrument connectable de manière amovible à celui-ci dans trois dimensions ; et
- moyennant quoi ledit au moins un instrument est ledit instrument laser et ledit instrument laser est monté de manière amovible sur le bras de positionnement,
**caractérisé en ce que** ledit instrument de mesure ultrasonique est également ledit au moins un instrument et est également monté de manière amovible sur le bras de positionnement, et ledit premier moyen lisible par ordinateur et ledit second moyen lisible par ordinateur sont connectés au bras de positionnement.

2. Système de balayage de corrosion selon la revendication 1, dans lequel ledit bras de positionnement, capable de positionner et de déplacer au moins un instrument connectable de manière amovible à celui-ci dans trois dimensions sur la zone définie pour l'analyse de balayage de corrosion, comprend un membre de base (2) adapté pour positionner le bras sur un élément de montage (5), une première jambe (3) connectée de manière rotative au membre de base (2), une seconde jambe (4) connectée de manière rotative à la première jambe (3) et adaptée pour avoir au moins un instrument monté de manière rotative et amovible sur celle-ci.

3. Système de balayage de corrosion selon la revendication 1 ou 2, dans lequel ledit membre de base (2) dudit bras de positionnement est positionné sur un élément de montage (5) comme un dessus de table, un rail coulissant (10), un trépied, un bloc magnétique, un verrouillage de came ou un élément similaire.

4. Système de balayage de corrosion selon la revendication 1, 2 ou 3, dans lequel le premier moyen lisible par ordinateur (7) est adapté pour recevoir et traiter les données d'état de surface pouvant être obtenues par l'instrument laser (6) en utilisant une méthode algorithmique de meilleure correspondance.

5. Système de balayage de corrosion selon l'une quelconque des revendications 1 à 4, dans lequel le premier moyen lisible par ordinateur (7) est en outre adapté pour recevoir et traiter les données d'état de surface pouvant être obtenues par l'instrument laser (6) en utilisant une méthode algorithmique de plan de meilleure correspondance par flottaison.

6. Système de balayage de corrosion selon l'une quelconque des revendications 1 à 5, dans lequel l'instrument laser (6) comprend une source de lumière laser adaptée pour émettre une lumière laser à travers une zone de la surface d'un matériau définie pour l'analyse de balayage de corrosion, un moyen pour projeter une lumière laser à travers la zone de la surface, et un détecteur de lumière laser adapté pour détecter une lumière laser réfléchie de la zone de la surface du matériau et générer des données d'état de surface.

7. Système de balayage de corrosion selon l'une quelconque des revendications 1 à 6, moyennant quoi l'instrument laser et l'instrument de mesure ultrasonique sont tous les deux montés de manière rotative sur la seconde jambe du bras de positionnement.

8. Système de balayage de corrosion selon l'une quelconque des revendications 1 à 7, dans lequel le second moyen lisible par ordinateur est différent du premier moyen lisible par ordinateur et moyennant quoi le premier moyen lisible par ordinateur (7) et le second moyen lisible par ordinateur sont capables d'être interconnectés et dans lequel le premier moyen lisible par ordinateur (7) et le second moyen lisible par ordinateur comprennent soit deux ordinateurs différents ayant un processeur commun soit un ordinateur ayant deux processeurs différents.

9. Système de balayage de corrosion selon l'une quelconque des revendications 1 à 8, dans lequel le premier moyen lisible par ordinateur et le second moyen lisible par ordinateur comprennent un dispositif de sortie de données sélectionné dans le groupe se composant d'un affichage électronique, d'une imprimante, d'un traceur ou d'une combinaison de ceux-ci.

10. Système de balayage de corrosion selon l'une quelconque des revendications 1 à 9, dans lequel ledit système comprend en outre des instruments de mesure supplémentaires connectés de manière amovible à la seconde jambe (4) du bras de positionnement.

11. Système de balayage de corrosion selon l'une quelconque des revendications 1 à 10, comprenant en outre un système de refroidissement connectable à un instrument de mesure sur ledit bras de positionnement et capable de contrôler la température dudit instrument de mesure.

12. Procédé utilisant le système de balayage de corrosion selon la revendication 1 pour déterminer la durée de vie pour l'utilisation en toute sécurité d'un pipeline (13) comprenant les étapes consistant à :
a) définir une zone pour l'analyse de corrosion de surface sur le pipeline (13),
b) fournir un système de balayage de corrosion pour balayer la zone définie sur le pipeline (13),
c) localiser et mesurer la corrosion sur la surface de la zone définie au moyen du système de balayage de corrosion, pour localiser et mesurer une pluralité de piqûres de corrosion sur ladite surface,
d) déterminer l'épaisseur de paroi du pipeline à la zone définie au moyen du système de balayage de corrosion,
**caractérisé en ce que** le procédé comprend en outre l'étape consistant à déterminer la durée de vie pour l'utilisation en toute sécurité du pipeline en traitant les données d'état de surface relatives à la corrosion à la zone définie obtenues aux étapes c) et d).

13. Procédé selon la revendication 12, dans lequel les étapes c) et d) comprennent l'étape consistant à déplacer le système de balayage de corrosion dans trois dimensions sur la surface de la zone définie, moyennant quoi chaque mesure par le système de balayage de corrosion fournit des données d'état de surface dans des coordonnées X, Y et Z.

14. Procédé selon la revendication 12 ou 13, dans lequel les étapes c) et d) comprennent l'étape consistant à déplacer le système de balayage de corrosion dans trois dimensions sur la surface de la zone définie, moyennant quoi pour chaque mesure par le système de balayage de corrosion, les données d'état de surface dans les coordonnées X, Y et Z sont variables.

15. Procédé selon l'une quelconque des revendications 12 à 14, dans lequel des piqûres de corrosion adjacentes sont localisées, étendues et interprétées comme étant des zones susceptibles de corrosion.

16. Procédé selon l'une quelconque des revendications 12 à 15, dans lequel la zone définie pour l'analyse de corrosion de surface sur le pipeline (13) comprend des zones de conduites droites aussi bien qu'incurvées et est de préférence une zone soudée.
